# EUROPEAN PATENT SPECIFICATION

(11) **EP 0 691 875 B1**
(45) Date of publication and mention of the grant of the patent: **24.06.1998**
(21) Application number: 94912128.9
(22) Date of filing: 30.03.1994
(51) Int. Cl.: B01D 9/02, B01D 1/26

(54) **METHOD AND DEVICE FOR PRECIPITATING CRYSTALS FROM A SOLUTION**
METHODE UND VORRICHTUNG ZUM FÄLLEN VON KRISTALLEN AUS EINER LÖSUNG
PROCEDE ET DISPOSITIF DE PRECIPITATION DE CRISTAUX A PARTIR D'UNE SOLUTION

(30) Priority: 31.03.1993 SE 9301069
(43) Date of publication of application: 17.01.1996
(73) Proprietor: ABB FLÄKT AB, S-120 86 Stockholm (SE)
(72) Inventor: RAGNARSSON, Sven, S-360 44 Ingelstad (SE)
(74) Representative: Berglund, Gustav Arthur
(86) International application number: SE9400288
(87) International publication number: WO9422546

(56) References cited:
- DE-C- 2 752 856
- US-A- 2 739 044
- US-A- 3 653 848
- US-A- 4 160 812

## Description

The present invention relates to a method and a device for recovering crystals from a solution by evaporation with crystallisation in an evaporation plant having at least two stages.

The technique can be generally used in applications where a product in the form of crystals is to be recovered from a solution. A particularly preferred field is the recovery of NaCl in connection with flue gas cleaning in which hydrogen chloride is absorbed in an aqueous solution and, after treatment with a sodium-based salt, e.g. sodium hydroxide, sodium bicarbonate and sodium carbonate, having a pH-increasing effect, is present as dissolved NaCl together with a number of impurities. The present invention will now be described with reference to this specific and especially preferred application, although the invention is not restricted to this field, but concerns all applications in which crystals are recovered from a solution.

Since the requirements as regards pollution-control measures are becoming more and more stringent, it is desirable to carry out flue gas cleaning in an essentially closed system, i.e. no polluted waste water should be discharged. One step in providing such a closed system is to separate, in wet collecting of hydrogen chloride from flue gases, hydrogen chloride as a dilute solution which after treatment with a sodium-based salt contains, in addition to NaCl, several different impurities. By evaporation and crystallisation, the NaCl-content of the solution is recovered in as pure a form as possible. The evaporated water is condensed and recycled.

Evaporation and crystallisation of the solution can be carried out in various ways. A frequent technique is so-called single-effect evaporation, i.e. evaporation and crystallisation are carried out in a single evaporator. This technique requires, however, a considerable consumption of steam and results in inferior salt purity. The inferior salt purity depends on, inter alia, the high concentration of calcium impurities in the incoming liquid and the insufficient capacity of the technique to separate NaCl and impurities.

One way of reducing the steam consumption is to perform the evaporation in several steps, one evaporator being used for each partial step in the production of salt. A prior-art embodiment comprises a plant with four evaporators, preevaporation being performed in a first evaporator, crystallisation of product salt or salt for recrystallisation in a second evaporator and crystallisation of contaminated salt in a third evaporator. The final concentration of waste is carried out in a fourth evaporator without recovery of salt. If recrystallisation of product salt is necessary, the plant is equipped with a further evaporator. US-A-4 160 812 discloses a multi-stage evaporative crystallizer.

In order to avoid problems with coatings in the wet collecting of hydrogen chloride from flue gases, the concentration of dissolved substances in the absorption solution is low after treatment with a sodium-based salt, i.e. it consists of a dilute NaCl-solution. This means that a large amount of water must be distilled off by preevaporation before the crystallisation of NaCl begins. When the water in the solution is distilled off, it is however not only the NaCl concentration that increases, but also the concentration of the impurities, which means that the crystallised salt is relatively contaminated. Therefore, a recrystallisation step is in many cases required so as to obtain a higher purity of the product salt. The salt which is to be recrystallised is usually dissolved in condensate and supplied to an additional evaporator, which entails an additional steaming cost in the plant.

The object of the present invention is to provide a method and a device for obtaining, with a low steam consumption, a salt of very high purity, without necessitating a separate recrystallisation step.

This object is achieved by carrying out the evaporation in a plant with at least two stages, the salt which is crystallised in each stage except in the first one being redissolved to a substantially saturated solution, i.e. a solution having a degree of saturation of 20-100%, preferably 80-100%, especially 98%, and subsequently being supplied as a solution for evaporation to the preceding stage in the plant. As a result, a successive recrystallisation in several steps occurs. The final product salt is collected from the first evaporator of the plant, in which the lowest concentration of impurities is to be found as the salt is crystallised.

According to the invention, a method thus is provided for recovering crystals from a solution by evaporation with crystallisation in an evaporation plant having at least two stages, the crystallised salt in each evaporation stage (n) being separated from mother liquor, characterised in that the crystallised salt, in every stage except in the first one, is dissolved in the incoming solution to the plant or water to a solution with a degree of saturation of 20-100%, whereupon this is conducted to the preceding evaporation stage (n-1), that the crystallised salt in the first evaporation stage of the plant is discharged as final product and that all mother liquors in each evaporation stage(n) are separated from crystallised salt and, in all stages except the last one, are transferred to a evaporation stage (≥n+1) which with respect to the liquid flow is arranged downstream in the plant.

According to the invention, there is also provided a device for recovering crystals from a solution by evaporation with crystallisation in an evaporation plant, said device comprising at least two evaporators with an inlet and an outlet for a heating medium and an inlet for the solution to be evaporated and an outlet for the evaporated solution, the outlet of each evaporator being provided with separating means for separation of crystals from mother liquor, characterised in that the inlet of an evaporator (n-1) is connected to the separating means of the subsequent evaporator (n) for receiving crystals from the separating means, and to a supply means for a liquid which forms, with the crystals, a solution having a degree of saturation of 20-100% which is to be evaporated which supply means is connected to a store containing the solution to be evaporated, that the outlet for crystals from the separating means of the first evaporator of the device is the product outlet, and that an outlet for mother liquor from the separating means is connected to a subsequent evaporator.

Further features and advantages of the invention are defined in the following specification and in the claims.

The invention will now be described in detail with reference to the accompanying drawing which schematically illustrates a preferred evaporation plant according to the invention. In the below description, the expression "preceding evaporator" concerns the evaporator which, with respect to the liquid flow in the plant, is arranged immediately upstream of another evaporator. The expression "subsequent evaporator" concerns the evaporator which, with respect to the liquid flow in the plant, is arranged immediately downstream of another evaporator. The expression "first evaporator" concerns the evaporator which, with respect to the liquid flow in the plant, is the first in the plant. No separated mother liquor is fed to this evaporator. Moreover, the term "mother liquor" refers to the liquid which is separated from crystals formed in evaporation, and finally the term "degree of saturation" refers to the relation of the concentration of the solution to the concentration of the saturated solution.

The plant in the Figure comprises three evaporators I1, I2 and I3, three separating means C1, C2 and C3, two containers T1 and T2 and one condenser K1. The three evaporators I1, I2 and I3 are connected to the conduits 1, 2 and 3 for supplying the heating medium which preferably is steam, and the evaporator I3 is connected to the condenser K1 via the conduit 4.

The conduit 5, which feeds, from a store (not shown), an incoming NaCl-containing solution to the plant, is connected to the containers T1 and T2. The container T1 is further connected to the evaporator I1 via the conduit 6 for conveying solution for evaporation, and the evaporator I1 has an outlet 7 for evaporated solution, which is connected to the separating means C1 via the conduit 8.

The separating means C1 comprises an outlet 9 for mother liquor, which is connected to the evaporator I2, and an outlet 10 for separated product crystals.

The container T2 is connected to the evaporator I2 via the conduit 11 for conveying solution to be evaporated.

The evaporator I2 has an outlet 12 which is connected to the separating means C2 via the conduit 13. The separating means C2 has an outlet 14 for mother liquor, which is connected to the evaporator I3, and an outlet 15 which is connected to the container T1 for conveying separated crystals.

The evaporator I3 comprises an outlet 16 connected to the separating means C3 via the conduit 17. The separating means C3 has an outlet 18 for mother liquor which is discharged as waste. Furthermore, the separating means C3 comprises an outlet 19 which is connected to the container T2 for conveying separated crystals.

The plant described above functions as follows.

Of the incoming solution L1 to the plant, a partial amount L1a is used to be dissolved to a substantially saturated solution of crystallised salt S2 from the evaporator I2. The substantially saturated solution is fed into the first evaporator I1 of the plant, in which a product salt S1 is crystallised. This product salt S1 is separated from mother liquor L2 in the separating means C1, whereupon the mother liquor L2 is supplied to the evaporator I2.

To the evaporator I2 there is fed a substantially saturated solution, which is formed of crystallised salt S3 from the evaporator I3 and a partial amount L1b of the incoming solution L1 to the plant. The salt S2 crystallised in the evaporator I2 is separated from mother liquor L3 in the separating means C2, whereupon the salt S2 is conducted to the container T1 to be dissolved, and the mother liquor L3 is conducted to the evaporator I3.

The salt S3 crystallised in the evaporator I3 is separated from mother liquor L4 in the separating means C3, whereupon the salt S3 is conducted to the container T2 to be dissolved, and the mother liquor L4 is discharged as waste.

In order to reduce the amount of waste, the mother liquor L4 can be e.g. spray-dried before being stored.

In order to perform the evaporation in the plant, a heating medium H1 (steam) is fed to the evaporator I1 via the conduit 1. The heating medium, which is produced in the evaporator I1, is transferred to the evaporator I2 in the conduit 2, and the one produced in the evaporator I2 is fed to the evaporator I3 in the conduit 3. Finally, the heating medium which is produced in the evaporator I3 is transferred to the condenser K1 to be condensed. The condensate formed can be transferred to a boiler for producing fresh heating medium in the form of steam and/or to a preceding wet collector.

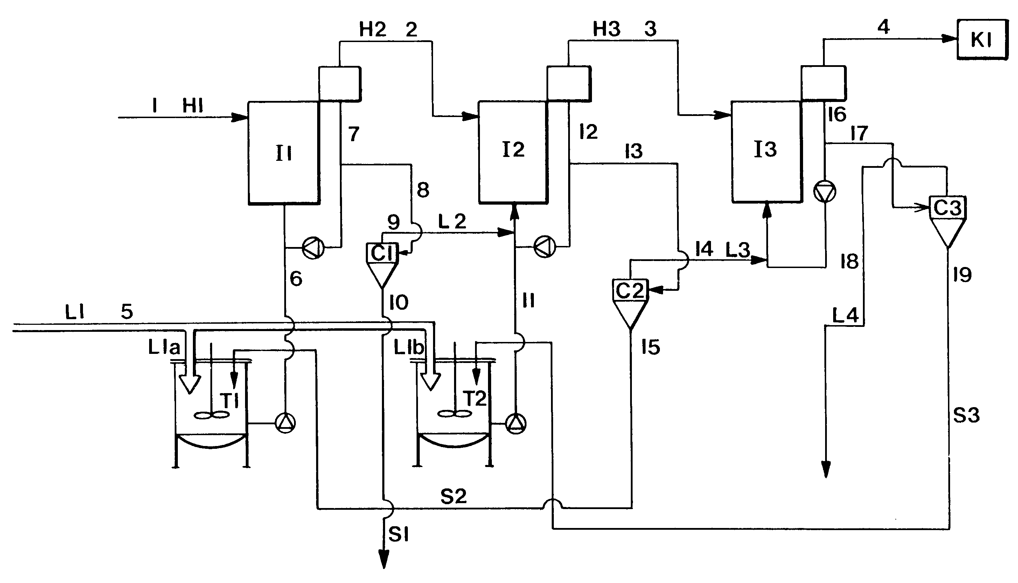

The method described above and schematically illustrated in Fig. 1 can be varied in several ways within the scope of the appended claims. Thus, instead of the solution L1 fed to the plant, pure water from a store (not shown) can be added when dissolving the salt S2 obtained from the evaporator I2. This is done if a particularly pure product salt S1 is desirable.

To separate impurities from the solution fed to the evaporator I1, an ion exchanger or a means for chemical precipitation can be arranged immediately before the supply of the solution to the evaporator I1.

Furthermore, two evaporators can be connected in parallel for the heating medium (steam), whereas the conveying of mother liquor and salt is carried out as described above.

Moreover, the plant can have concurrent or counter-current feeding, concurrent feeding implying that the solution and the heating medium accompany each other from evaporator to evaporator, as illustrated in Fig. 1. Countercurrent feeding means that the solution flows e.g. from the left to the right in Fig. 1, whereas the heating medium flows from the right to the left. This means that the incoming heating medium to the plant is introduced into the evaporator I3, and that the heating medium produced in the evaporator I3 is transferred to the evaporator I2 etc. The heating medium produced in the evaporator I1 is transferred to a condenser.

The mother liquor separated in the separating means C1 and C2 can be conducted not only to the directly subsequent evaporator I2 and I3, respectively, but also from e.g. C1 to I3 (not shown in the drawing). However, the separated mother liquor should not be conducted upstream with respect to the liquid flow in the plant, i.e. the mother liquor separated in e.g. the separating means C2 should not be recycled to the evaporator I2 or I1, since this would increase, in an undesirable manner, the content of impurities of the liquid supplied to these evaporators.

The number of evaporators which the inventive device can have, is determined by the steam data of the heating medium which is fed to the first evaporator, as well as the conditions (temperature, pressure) under which the condenser at the end of the device operates. While applying the existing technique, it is possible from an economic view to have a maximum of 6 evaparators, but preferably 3-4 evaporators are used.

The separating means in the device may consist of e.g. centrifuges, screens or sieves. At present, centrifuges are preferred.

For the purpose of exemplifying the present invention, a test was carried out in a plant according to the Figure. The incoming heating medium used in the plant was saturated steam at a pressure of 2 bar, and the incoming solution to the plant was composed as stated in Table 1.

The results from the test are shown in Table 1.

In order to compare these results with those obtained from a plant according to the prior-art technique, a test was carried out in which the incoming solution to the plant was the same as in the above test. Also in this case, the incoming heating medium was saturated steam at a pressure of 2 bar.

The prior-art plant comprises three evaporators of same type as in the inventive plant described above, preconcentration being carried out in the first evaporator. A partial flow of the evaporated solution from the third evaporator was mixed with the preconcentrated solution from the first evaporator and conducted to the second evaporator from which the product salt was collected.

In the test according to the prior-art technique, the results shown in Table 1 were obtained.

**TABLE 1**

| | (% by weight) | | | | | | |
|---|---|---|---|---|---|---|---|
| | NaCl | KCL | K₂SO₄ | NaBr | NaF | CaSO₄ | H₂O |
| Incoming solution to the plant | 8.33 | 0.17 | 0.26 | 0.062 | 0.0042 | 0.0021 | 91.17 |
| Product salt in prior-art technique | 93.37 | 0.57 | 0.90 | 0.21 | 0.014 | 0.0072 | 4.95 |
| Product salt in connection with the present invention | 94.46 | 0.18 | 0.28 | 0.068 | 0.0045 | 0.0023 | 5.01 |
| Waste in prior-art technique | 24.38 | 2.68 | 4.19 | 1.00 | 0.067 | 0.034 | 67.73 |
| Waste in connection with the present invention | 22.82 | 4.63 | 7.24 | 1.74 | 0.12 | 0.058 | 63.39 |

As is evident from Table 1, a much purer salt is obtained in the plant according to the present invention as compared to the prior-art plant.

Thus, the present invention provides a method and a device for recovering crystals from a solution by evaporation, a purer product salt being obtained at a lower cost, since a separate recrystallisation step is not necessary.

## Claims

1. Method for recovering crystals from a solution by evaporation with crystallisation in an evaporation plant having at least two stages, the crystallised salt in each evaporation stage (n) being separated from mother liquor, **characterised** in that the crystallised salt, in all stages except the first one, is dissolved in the incoming solution to the plant or water to a solution having a degree of saturation of 20-100%, whereupon this is fed to the preceding evaporation stage (n-1), that the crystallised salt in the first evaporation stage of the plant is collected as final product and that all mother liquors in each evaporation stage(n) are separated from crystallised salt and, in all stages except the last one, are transferred to a evaporation stage (≥n+1) which with respect to the liquid flow is arranged downstream in the plant.

2. Method as claimed in claim 1, **characterised** in that the crystallised salt is dissolved in the incoming solution to the plant to a solution having a degree of saturation of 80-100%, preferably 98%.

3. Method as claimed in claim 1 or 2, **characterised** in that the crystallised salt in the second evaporation stage of the plant is dissolved in pure water to a solution having a degree of saturation of 80-100%, preferably 98%.

4. Method as claimed in claim 3, **characterised** in that the salt solution, before being fed to the first evaporation stage, is conveyed through an ion exchanger and/or is subjected to chemical precipitation.

5. Method as claimed in any one of claims 1-4, **characterised** in that steam is supplied to the evaporation plant countercurrently or concurrently with the liquid.

6. A device for recovering crystals from a solution by evaporation with crystallisation in an evaporation plant, said device comprising at least two evaporators (I1, I2, I3) with an inlet (1, 2, 3) for a heating medium and an inlet (6, 11, 14) for a solution to be evaporated and an outlet (7, 12, 16) for the evaporated solution, the outlet (7, 12, 16) of each evaporator (I1, I2, I3) being provided with separating means (C1, C2, C3) for separating crystals from mother liquor, **characterised** in that the inlet of an evaporator (I1, I2...In-1) is connected to the separating means (C2, C3...Cn) of the subsequent evaporator (I2, I3...In) for receiving crystals from the separating means, and to a supply means (5) for liquid which forms, with the crystals, a solution which has a degree of saturation of 20-100% and is to be evaporated which supply means is connected to a store containing the solution to be evaporated (L1), that the outlet (10) for crystals from the separating means (C1) of the first evaporator (I1) of the device is the product outlet, and that an outlet (9, 14, 18) for mother liquor from the separating means (C1, C2, C3) is connected to a subsequent evaporator.

7. Device as claimed in claim 6, **characterised** in that the supply means for the liquid adjacent to the inlet of the first evaporator of the device is connected to a water store.

8. Device as claimed in claim 7, **characterised** in that the inlet (6) of the first evaporator (I1) of the device is equipped with an ion exchanger and/or means for chemical precipitation.

9. Device as claimed in any one of claims 6-8, **characterised** in that the heating medium inlet of an evaporator (In) is connected to the heating medium outlet or inlet of the preceding evaporator (In-1).

## Patentansprüche

1. Verfahren zum Rückgewinnen Von Kristallen aus einer Lösung durch Eindampfen mit Kristallisation in einer Eindampfanlage mit mindestens zwei Stufen, wobei das kristallisierte Salz in jeder Eindampfstufe (n) von der Mutterlauge abgetrennt wird, **dadurch gekennzeichnet**, daß das kristallisierte Salz in allen Stufen mit Ausnahme der ersten Stufe in der in die Anlage eintretenden Lösung oder Wasser zu einer Lösung mit einem Sättigungsgrad von 20-100 % gelöst wird, worauf diese der vorangehenden Eindampfstufe (n-1) zugeführt wird, daß das kristallisierte Salz in der ersten Eindampfstufe der Anlage als Endprodukt entnommen wird und daß alle Mutterlaugen in jeder Eindampfstufe (n) von dem kristallisierten Salz abgetrennt und in allen Stufen mit Ausnahme der letzten Stufe zu einer Eindampfstufe (≥n+1) überführt werden, welche, bezogen auf den Flüssigkeitsstrom, stromabwärts in der Anlage angeordnet ist.

2. Verfahren nach Anspruch 1, **dadurch gekennzeichnet**, daß das kristallisierte Salz in der in die Anlage eintretenden Lösung zu einer Lösung mit einem Sättigungsgrad von 80-100 %, vorzugsweise 98 % gelöst wird.

3. Verfahren nach Anspruch 1 oder 2, **dadurch gekennzeichnet**, daß das kristallisierte Salz in der zweiten Eindampfstufe der Anlage in reinem Wasser zu einer Lösung mit einem Sättigungsgrad von 80-100 %, vorzugsweise 98 % gelöst wird.

4. Verfahren nach Anspruch 3, **dadurch gekennzeichnet**, daß die Salzlösung, bevor sie der ersten Eindampfstufe zugeführt wird, durch einen lonenaustauscher geleitet und/oder einer chemischen Fällung unterworfen wird.

5. Verfahren nach einem der Ansprüche 1-4, **dadurch gekennzeichnet**, daß der Eindampfanlage Dampf gegenläufig oder gleichgerichtet zu der Flüssigkeit zugeführt wird.

6. Vorrichtung zum Rückgewinnen von Kristallen aus einer Lösung durch Eindampfen mit Kristallisation in einer Eindampfanlage, wobei die Vorrichtung mindestens zwei Eindampfer (I1,I2,I3) mit einem Einlaß (1,2,3) für ein Heizmedium und einem Einlaß (6,11,14) für eine einzudampfende Lösung und einem Auslaß (7,12,16) für die eingedampfte Lösung umfaßt, wobei der Auslaß (7,12,16) von jedem Eindampfer (I1,I2,I3) mit Trennmitteln (C1,C2,C3) zum Abtrennen von Kristallen von der Mutterlauge versehen ist, **dadurch gekennzeichnet**, daß der Einlaß eines Eindampfers (I1,I2...In-1) mit dem Trennmittel (C2,C3...Cn) des nachfolgenden Eindampfers (I2,I3...In) zum Empfangen von Kristallen von dem Trennmittel und mit einem Zufuhrmittel (5) für eine Flüssigkeit verbunden ist, welche mit den Kristallen eine Lösung bildet, die einen Sättigungsgrad von 20-100 % aufweist und eingedampft werden soll, wobei das Zufuhrmittel mit einem Speicher verbunden ist, welcher die einzudampfende Lösung (L1) enthält, daß der Auslaß (10) für Kristalle von dem Trennmittel (C1) des ersten Eindampfers (I1) der Vorrichtung der Produktauslaß ist, und daß ein Auslaß (9,14,18) für Mutterlauge von dem Trennmittel (C1,C2,C3) mit einem nachfolgenden Eindampfer verbunden ist.

7. Vorrichtung nach Anspruch 6, **dadurch gekennzeichnet**, daß das Zufuhrmittel für die Flüssigkeit, welches dem Einlaß des ersten Eindampfers der Vorrichtung benachbart ist, mit einem Wasserspeicher verbunden ist.

8. Vorrichtung nach Anspruch 7, **dadurch gekennzeichnet**, daß der Einlaß (6) des ersten Eindampfers (I1) der Vorrichtung mit einem lonenaustauscher und/oder Mittel zur chemischen Fällung ausgerüstet ist.

9. Vorrichtung nach einem der Ansprüche 6-8, **dadurch gekennzeichnet**, daß der Heizmediumeinlaß eines Eindampfers (In) mit dem Heizmediumauslaß oder -einlaß des vorangehenden Eindampfers (In-1) verbunden ist.

## Revendications

1. Procédé pour récupérer des cristaux à partir d'une solution par évaporation avec cristallisation dans une installation d'évaporation ayant au moins deux étages, le sel cristallisé dans chaque étage d'évaporation (n) étant séparé de la liqueur mère, caractérisé en ce que le sel cristallisé, dans chaque étage sauf dans le premier, est dissous dans la solution entrant dans l'installation ou dans l'eau en une solution ayant un degré de saturation de 20 à 100 %, après quoi celle-ci est introduite dans l'étage d'évaporation précédent (n-1), en ce que le sel cristallisé dans le premier étage d'évaporation de l'installation est récupéré comme produit final et en ce que toutes les liqueurs mères dans chaque étage d'évaporation (n) sont séparées du sel cristallisé et, dans tous les étages sauf le premier, sont transférées dans un étage d'évaporation (≥n+1) qui, par rapport au courant de liquide, est agencé en aval dans l'installation.

2. Procédé selon la revendication 1, caractérisé en ce que le sel cristallisé est dissous dans la solution entrant dans l'installation en une solution ayant un degré de saturation de 80-100 %, de préférence de 98 %.

3. Procédé selon la revendication 1 ou 2, caractérisé en ce que le sel cristallisé dans le second étage d'évaporation de l'installation est dissous dans l'eau pure en une solution ayant un degré de saturation de 80-100 %, de préférence de 98 %.

4. Procédé selon la revendication 3, caractérisé en ce que la solution de sel, avant d'être introduite dans le premier étage d'évaporation, est amenée à traverser un échangeur d'ions et/ou est soumise à une précipitation chimique.

5. Procédé selon l'une quelconque des revendications 1 à 4, caractérisé en ce que de la vapeur est introduite dans l'installation d'évaporation à contre-courant ou à cocourant du liquide.

6. Dispositif pour récupérer des cristaux à partir d'une solution par évaporation avec cristallisation dans une installation d'évaporation, ledit dispositif comprenant au moins deux évaporateurs (I1, I2,I3) avec une entrée (1, 2, 3) pour un agent chauffant et une entrée (6, 11, 14) pour une solution à évaporer et une sortie (7, 12, 16) pour la solution évaporée, la sortie (7, 12, 16) de chaque évaporateur (I1, I2, I3) étant munie d'un moyen de séparation (C1, C2, C3) pour séparer les cristaux de la liqueur mère, caractérisé en ce que l'entrée d'un évaporateur (I1, I2,... In-1) est reliée au moyen de séparation (C2, C3,... Cn) de l'évaporateur subséquent (I2, I3, ... In) pour recevoir des cristaux provenant du moyen de séparation, et à un moyen d'apport (5) pour du liquide qui forme, avec les cristaux, une solution qui a un degré de saturation de 20-100 % et qui doit être évaporée, lequel moyen d'apport est relié à un réservoir contenant la solution à évaporer (L1), en ce que la sortie (10) pour les cristaux du moyen de séparation (C1) du premier évaporateur (I1) du dispositif est la sortie de produit, et en ce qu'une sortie (9, 14, 18) pour la liqueur mère provenant du moyen de séparation (C1, C2, C3) est reliée à un évaporateur subséquent.

7. Dispositif selon la revendication 6, caractérisé en ce que le moyen d'apport pour le liquide adjacent à l'entrée du premier évaporateur du dispositif est relié à un réservoir d'eau.

8. Dispositif selon la revendication 7, caractérisé en ce que l'entrée (6) du premier évaporateur (I1) du dispositif est équipée d'un échangeur d'ions et/ou de moyens pour la précipitation chimique.

9. Dispositif selon l'une quelconque des revendications 6 à 8, caractérisé en ce que l'entrée d'agent chauffant d'un évaporateur (In) est reliée à la sortie ou à l'entrée d'agent chauffant de l'évaporateur précédent (In-1).
